# EUROPEAN PATENT APPLICATION

(11) **EP 4 765 457 A1**
(43) Date of publication of application: **24.06.2026**
(21) Application number: 24922726.5
(22) Date of filing: 05.02.2024
(51) Int. Cl.: H01M 50/552

(54) **BATTERY CELL, BATTERY, AND ELECTRICAL APPARATUS**

(71) Applicant: Contemporary Amperex Technology Co., Limited, Ningde, Fujian 352100 (CN)
(72) Inventor: YANG, Rui, Ningde, Fujian 352100 (CN); XUE, Junpeng, Ningde, Fujian 352100 (CN); WEI, Xichen, Ningde, Fujian 352100 (CN); LI, Heyuan, Ningde, Fujian 352100 (CN)
(74) Representative: Kraus & Lederer PartGmbB
(86) International application number: PCT/CN2024/075956
(87) International publication number: WO 2025/166480

(57) **Abstract**

A battery cell (7), a battery (2), and an electrical apparatus. The battery cell (7) comprises a casing (20), an electrode assembly (10), and an electrode terminal (30). The casing (20) comprises a wall portion (23). The electrode assembly (10) is accommodated in the casing (20) and comprises tabs (12). The electrode terminal (30) is arranged on the wall portion (23); the side of the electrode terminal (30) away from the electrode assembly (10) in the thickness direction of the wall portion (23) is provided with an outer surface (31), the electrode terminal (30) is provided with a recessed portion (32) recessed from the outer surface (31), the electrode terminal (30) comprises a connecting portion (33) arranged at the bottom of the recessed portion (32), and the connecting portion (33) is electrically connected to the tabs (12).

## Description

### TECHNICAL FIELD

This application relates to the field of batteries, and in particular, to a battery cell, a battery, and an electrical apparatus.

### BACKGROUND

With the development of battery technology, battery cells are applied in more fields, and are gradually replacing conventional petrochemical energy in the field of automotive power. A battery cell may store chemical energy and controllably convert the chemical energy into electrical energy. In a rechargeable battery cell, after discharge, an active material may be activated through charge, and then reused.

To improve the reliability of the battery cell is an important research direction in the industry.

### SUMMARY

This application provides a battery cell, a battery, and an electrical apparatus, which can improve reliability.

In a first aspect, this application provides a battery cell, including a casing, an electrode assembly, and an electrode terminal. The casing includes a wall portion. The electrode assembly is accommodated in the casing and includes a tab. The electrode terminal is provided on the wall portion; a side of the electrode terminal away from the electrode assembly along a thickness direction of the wall portion is provided with an outer surface; the electrode terminal is provided with a recessed portion recessed from the outer surface; the electrode terminal includes a connection portion provided at a bottom of the recessed portion; and the connection portion is electrically connected to the tab.

Since the recessed portion is provided, a dimension of the connection portion in the thickness direction can be reduced, facilitating connection of the connection portion with a component inside the casing from the outside of the connection portion, reducing the risk that particles remaining on the connection portion enter the casing, improving reliability.

In some embodiments, the outer surface of the electrode terminal is configured to contact and connect to a busbar component of the battery. At least part of the current can be transmitted directly between the electrode terminal and the busbar component without passing through another component, thereby shortening a conductive path between the electrode terminal and the busbar component, reducing resistance, and improving a current carrying capability of the battery.

In some embodiments, the electrode terminal is configured to be welded to the busbar component to form a first welding portion, and projections of the first welding portion and the recessed portion in the thickness direction of the wall portion do not overlap. The first welding portion formed by welding can reduce the resistance between the electrode terminal and the busbar component, improve the current carrying capability, and enhance connection strength between the electrode terminal and the busbar component. During welding, the electrode terminal can restrict melt formed after melting of the busbar component, reducing a risk that the melt flows into the recessed portion, reducing a possibility that the busbar component is welded through to form a through hole, improving the current carrying capability of the first welding portion, improving the reliability of the battery cell.

In some embodiments, the wall portion is provided with an electrode lead-out hole, and the electrode lead-out hole penetrates the wall portion along the thickness direction. The electrode terminal further includes a terminal body and a first limiting portion, the outer surface of the electrode terminal includes a first outer surface of the terminal body and a second outer surface of the first limiting portion, the recessed portion is recessed from the first outer surface toward the electrode assembly, the terminal body is at least partially accommodated in the electrode lead-out hole, the first limiting portion is located on a side of the wall portion away from the electrode assembly and connected to an outer peripheral surface of the terminal body, and the connection portion is connected to the terminal body.

With the terminal body extending into the electrode lead-out hole, connection of the connection portion with another component inside the casing can be facilitated. The wall portion can form a stop for the first limiting portion, thereby reducing the risk that the electrode terminal falls into the casing through the electrode lead-out hole.

In some embodiments, along the thickness direction of the wall portion, a dimension of the terminal body is greater than a dimension of the first limiting portion, and the first outer surface is configured to contact and connect to the busbar component of the battery.

The terminal body is connected to the connection portion, and the busbar component contacts and connects to the first outer surface. This can shorten the conductive path between the busbar component and the connection portion, reduce resistance, reduce heat generation, alleviate temperature rise of the electrode terminal and the busbar component, and improve the reliability of the battery cell. The terminal body has a larger dimension relative to the first limiting portion, and connecting the terminal body with the busbar component can reduce the risk of cracking of the electrode terminal when connected to the busbar component, improving the reliability of the battery cell.

In some embodiments, the electrode terminal further includes a second limiting portion, and the second limiting portion is located on a side of the wall portion facing the electrode assembly and protrudes from the outer peripheral surface of the terminal body.

The wall portion may be limited between the first limiting portion and the second limiting portion to restrict relative movement between the electrode terminal and the wall portion, reducing a force at the connection between the electrode terminal and the busbar component when the battery is subjected to external impact, reducing a risk of battery failure.

In some embodiments, the battery cell further includes a cover plate, where the recessed portion is provided with an opening, and the cover plate covers the opening and connected to the electrode terminal. The cover plate can shield the connection portion, reducing a risk that the connection portion is corroded by external impurities, improving the stability and reliability of the connection between the connection portion and a component inside the casing.

In some embodiments, at least part of the cover plate is accommodated in the recessed portion. Accommodating the cover plate with the recessed portion can reduce a dimension by which the cover plate protrudes from the outer surface of the electrode terminal, thereby reducing the maximum dimension of the battery cell in the thickness direction of the wall portion, improving space utilization, increasing the energy density of the battery.

In some embodiments, the cover plate is welded to the electrode terminal to form a second welding portion. Along a direction from the electrode assembly toward the wall portion, the second welding portion does not protrude from the outer surface. When the busbar component contacts the outer surface, the second welding portion is less likely to contact the busbar component, thereby reducing the risk of interference between the second welding portion and the busbar component, reducing gaps between the busbar component and the outer surface, increasing a current carrying area and connection strength between the busbar component and the electrode terminal.

In some embodiments, the cover plate is entirely accommodated in the recessed portion, a side of the cover plate away from the connection portion is provided with a third outer surface, and in the thickness direction, the third outer surface is closer to the connection portion than the outer surface. The second welding portion formed by welding is uneven, and the second welding portion may protrude from the third outer surface. The third outer surface is inwardly positioned relative to the outer surface, thereby reducing the risk that the second welding portion protrudes from the outer surface in the thickness direction.

In some embodiments, the recessed portion is provided with an opening, the outer surface surrounds the opening, and an area of the outer surface is greater than an area of the opening. The outer surface has a larger area to increase the contact area between the outer surface and the busbar component, improving the current carrying capability, reducing heat generation.

In some embodiments, the area of the opening is greater than or equal to 0.01 times the area of the outer surface, so that an external device can connect the connection portion with a component inside the casing through the opening.

In some embodiments, the area of the opening is less than or equal to 0.34 times the area of the outer surface, to reduce area loss of the outer surface and increase the contact area between the outer surface and the busbar component, improving current carrying capability, reducing heat generation.

In some embodiments, an area of a bottom surface of the recessed portion is greater than or equal to 0.01 times the area of the outer surface, to increase the area of the connection portion, improve the connection strength and the capability of current carrying between the connection portion and a component inside the casing, and improve the reliability of the battery cell.

In some embodiments, the area of the bottom surface of the recessed portion is less than or equal to 0.34 times the area of the outer surface, to reduce the area loss of the outer surface, increase the contact area between the outer surface and the busbar component, improve the current carrying capability, and reduce heat generation.

In some embodiments, an area of a cross-section of the recessed portion perpendicular to the thickness direction gradually decreases along a direction away from the outer surface. When the cover plate is placed into the recessed portion, a side surface of the recessed portion can support the cover plate and position the cover plate, thereby simplifying the assembly of the cover plate. In addition, a tapered structure of the recessed portion can also improve the fitting between the recessed portion and the cover plate, accommodating larger dimensional fitting tolerances.

In some embodiments, the casing includes a casing body and an end cover, the casing body is provided with a casing opening, and the end cover covers the casing opening; the casing body includes a side wall and an end wall that are integrally formed, the side wall surrounds an outer side of the electrode assembly, and the end wall is disposed opposite the casing opening; and the wall portion is the end cover or the end wall. Since the end cover or the end wall is flatter than the side wall, providing the electrode terminal on the end cover or the end wall can improve assembly efficiency of the battery cell.

In some embodiments, the battery cell further includes a current collecting member, where the current collecting member connects the tab and the connection portion.

In a second aspect, this application provides a battery, including the battery cell provided in any embodiment of the first aspect and a busbar component, where the busbar component contacts and connects to the outer surface. At least part of the current can be transmitted directly between the electrode terminal and the busbar component without passing through another component, thereby shortening a conductive path between the electrode terminal and the busbar component, reducing resistance, and improving a current carrying capability of the battery.

In some embodiments, the electrode terminal is welded to the busbar component to form a first welding portion, and projections of the first welding portion and the recessed portion in the thickness direction of the wall portion do not overlap. During welding, the electrode terminal can restrict melt formed after melting of the busbar component, reducing a risk that the melt flows into the recessed portion, reducing a possibility that the busbar component is welded through to form a through hole, improving the current carrying capability of the first welding portion, improving the reliability of the battery cell.

In some embodiments, the wall portion is provided with an electrode lead-out hole, and the electrode lead-out hole penetrates the wall portion along the thickness direction. The electrode terminal further includes a terminal body and a first limiting portion, the outer surface of the electrode terminal includes a first outer surface of the terminal body and a second outer surface of the first limiting portion, the recessed portion is recessed from the first outer surface toward the electrode assembly, the terminal body is at least partially accommodated in the electrode lead-out hole, the first limiting portion is located on a side of the wall portion away from the electrode assembly and connected to an outer peripheral surface of the terminal body, and the connection portion is connected to the terminal body. The busbar component contacts the first outer surface, and at least part of the first welding portion is formed on the terminal body.

Forming at least part of the first welding portion on the terminal body can provide the first welding portion with a larger dimension in the thickness direction of the wall portion, thereby enhancing the connection strength between the busbar component and the electrode terminal, reducing the risk of separation between the busbar component and the electrode terminal, improving the capability of current carrying between the busbar component and the electrode terminal, improving the reliability of the battery cell.

In some embodiments, the busbar component further contacts the second outer surface, and part of the first welding portion is formed on the first limiting portion to reduce contact resistance between the first limiting portion and the busbar component, further improving the capability of current carrying between the electrode terminal and the busbar component, reducing heat generation, improving the reliability of the battery.

In some embodiments, the first welding portion includes a first weld mark and a second weld mark, the first weld mark is formed on the terminal body and the busbar component, and the second weld mark is formed on the first limiting portion and the busbar component. In the thickness direction, a maximum dimension of the first weld mark is greater than a maximum dimension of the second weld mark.

Compared with the second weld mark, the first weld mark has a larger dimension in the thickness direction, thereby enhancing the connection strength and the capability of current carrying between the terminal body and the busbar component. Compared with the first weld mark, the second weld mark has a smaller dimension in the thickness direction, thereby reducing the risk of melting through the first limiting portion, improving the reliability of the battery cell.

In some embodiments, the battery cell further includes a cover plate, the cover plate is accommodated in the recessed portion, and the cover plate is welded to the electrode terminal to form a second welding portion. In the thickness direction, the busbar component does not overlap with the second welding portion. When the busbar component contacts the outer surface, the second welding portion is less likely to interfere with the busbar component in the thickness direction, thereby reducing the gap between the busbar component and the outer surface, increasing the current carrying area and connection strength between the busbar component and the electrode terminal.

In some embodiments, the battery cell further includes a cover plate, the cover plate is accommodated in the recessed portion, and the cover plate is welded to the electrode terminal to form a second welding portion. In the thickness direction, the busbar component partially overlaps with the second welding portion, a side of the busbar component facing the second welding portion is provided with an avoidance recess, and the avoidance recess is configured to avoid the second welding portion.

Providing the avoidance recess can reduce the risk of contact between the second welding portion and the busbar component, reduce the gap between the busbar component and the outer surface, and increase the current carrying area and connection strength between the busbar component and the electrode terminal.

In a third aspect, this application provides an electrical apparatus, including the battery provided in any embodiment of the second aspect, where the battery is configured to provide electrical energy.

### BREIF DESCRIPTION OF DRAWINGS

Features, advantages, and technical effects of exemplary embodiments of this application will be described below with reference to the drawings.
FIG. 1 is a schematic structural diagram of a vehicle provided in some embodiments of this application;
FIG. 2 is a schematic exploded view of a battery provided in some embodiments of this application;
FIG. 3 is a schematic structural diagram of a battery module shown in FIG. 2;
FIG. 4 is a schematic exploded view of a battery cell provided in some embodiments of this application;
FIG. 5 is a schematic cross-sectional view of a battery cell and a busbar component provided in some embodiments of this application;
FIG. 6 is a schematic enlarged view at a circular frame in FIG. 5;
FIG. 7 is a schematic cross-sectional view of an electrode terminal of a battery cell provided in some embodiments of this application;
FIG. 8 is a schematic enlarged view at a square frame in FIG. 6;
FIG. 9 is a schematic cross-sectional view of a part of a battery provided in some embodiments of this application;
FIG. 10 is a schematic cross-sectional view of a part of a battery provided in other embodiments of this application;
FIG. 11 is a schematic cross-sectional view of a part of a battery provided in still other embodiments of this application;
FIG. 12 is a schematic cross-sectional view of a part of a battery provided in yet other embodiments of this application; and
FIG. 13 is a schematic diagram of a battery cell provided in still yet other embodiments of this application.

Reference signs in the detailed description are as follows:
1. vehicle; 2. battery; 3. controller; 4. motor; 5. box; 5a. first box portion; 5b. second box portion; 5c. accommodating space; 6. battery module; 7. battery cell; 8. busbar component; 8a. avoidance hole; 8b. avoidance recess; 9. first welding portion; 9a. first weld mark; 9b. second weld mark;
10. electrode assembly; 11. body portion; 12. tab;
20. casing; 21. casing body; 211. casing opening; 212. side wall; 213. end wall; 22. end cover; 23. wall portion; 231. electrode lead-out hole;
30. electrode terminal; 30a. second welding portion; 30b. third welding portion; 31. outer surface; 32. recessed portion; 321. opening; 322. bottom surface; 33. connection portion; 34. terminal body; 341. first outer surface; 342. outer peripheral surface; 35. first limiting portion; 351. second outer surface; 36. second limiting portion;
40. sealing member; 50. insulating component; 60. current collecting member;
70. cover plate; 71. third outer surface; and
Z. thickness direction.

### DETAILED DESCRIPTION OF EMBODIMENTS

To make the objectives, technical solutions, and advantages of the embodiments of this application clearer, the technical solutions in the embodiments of this application will be clearly and completely described below with reference to the drawings in the embodiments of this application. It is clear that the described embodiments are some but not all embodiments of this application. Based on the embodiments in this application, all other embodiments obtained by a person of ordinary skill in the art without creative efforts shall fall within the protection scope of this application.

To make the objectives, technical solutions, and advantages of the embodiments of this application clearer, the technical solutions in the embodiments of this application will be clearly described below with reference to the drawings in the embodiments of this application. It is clear that the described embodiments are some but not all embodiments of this application. Based on the embodiments in this application, all other embodiments obtained by a person of ordinary skill in the art without creative efforts shall fall within the protection scope of this application.

Unless otherwise defined, all technical and scientific terms used in this application have the same meaning as commonly understood by those skilled in the technical field to which this application pertains; in this application, the terms used in the specification of this application are for the purpose of describing specific embodiments only and are not intended to limit this application; the terms "include" and "has" in the specification and claims of this application and the above description of drawings, as well as any variations thereof, are intended to cover non-exclusive inclusion. The terms "first", "second", and the like in the specification and claims of this application or the above drawings are used to distinguish different objects, rather than to describe a specific order or primary-secondary relationship.

Reference in this application to "an embodiment" means that a particular feature, structure, or characteristic described with reference to the embodiment may be included in at least one embodiment of this application. The appearance of the phrase in various places in the specification does not necessarily refer to the same embodiment, nor is it an independent or alternative embodiment mutually exclusive with other embodiments.

In the description of this application, it should be noted that, unless otherwise expressly specified and limited, the terms "mount", "connect", "join", and "attach" should be understood in a broad sense, for example, it may be a fixed connection, a detachable connection, or an integral connection; or may be a direct connection, an indirect connection through an intermediate medium, or internal communication between two elements. For those of ordinary skill in the art, the specific meanings of the above terms in this application can be understood according to specific situations.

The term "and/or" in this application is merely a description of an association relationship of associated objects, indicating that three relationships can exist, for example, A and/or B can indicate: A alone, A and B together, and B alone. In addition, the character "/" in this application generally indicates that the associated objects before and after are in an "or" relationship.

In the embodiments of this application, the same reference signs denote the same components, and for brevity, detailed descriptions of the same components are omitted in different embodiments. It should be understood that the thickness, length, width, and other dimensions of various components in the embodiments of this application shown in the drawings, as well as the overall thickness, length, width, and other dimensions of an integrated apparatus, are merely exemplary illustrations and should not constitute any limitation to this application.

The term "a plurality of" appearing in this application refers to two or more (including two).

In the embodiments of this application, a battery cell may be a secondary battery, where a secondary battery refers to a battery cell that can be reused by activating an active material through charge after the battery is discharged.

The battery cell may be a lithium-ion battery cell, a sodium-ion battery cell, a lithium-sodium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead-acid battery cell, or the like, which is not limited in the embodiments of this application.

The battery cell generally includes an electrode assembly. The electrode assembly includes a positive electrode and a negative electrode.

During charge and discharge of the battery cell, active ions (such as lithium ions) are intercalated and deintercalated between the positive electrode and the negative electrode. A separator is provided between the positive electrode and the negative electrode, which can prevent short circuit between the positive electrode and the negative electrode while allowing passage of active ions.

In some embodiments, the positive electrode may be a positive electrode sheet, and the positive electrode sheet may include a positive electrode current collector and a positive electrode active material provided on at least one surface of the positive electrode current collector.

In an example, the positive electrode current collector is provided with two surfaces opposite in its thickness direction, and the positive electrode active material is provided on either or both of the two opposite surfaces of the positive electrode current collector.

In an example, the positive electrode current collector may be a metal foil or a composite current collector. For example, as the metal foil, aluminum or stainless steel with silver surface treatment, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and their respective modified compounds. However, this application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂ and LiMn2O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (such as LiNi_{0.80}Co_{0.15}Al_{0.05}O₂), and their modified compounds.

In some embodiments, the positive electrode may use foamed metal or foamed carbon. The foamed metal may be foamed nickel, foamed copper, foamed aluminum, foamed alloy, or the like. When the foamed metal is used as the positive electrode, a surface of the foamed metal may not be provided with the positive electrode active material, or may be provided with the positive electrode active material. In an example, lithium source material, potassium metal, or sodium metal may also be filled or/and deposited in the foamed metal, and the lithium source material is lithium metal and/or lithium-rich material.

In some embodiments, the negative electrode may be a negative electrode sheet, and the negative electrode sheet may include a negative electrode current collector.

In an example, the negative electrode current collector may be a metal foil, foamed metal, or composite current collector. For example, as the metal foil, aluminum or stainless steel with silver surface treatment, stainless steel, copper, aluminum, nickel, carbon electrode, carbon, nickel, titanium, or the like may be used. The foamed metal may be foamed nickel, foamed copper, foamed aluminum, foamed alloy, foamed carbon, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the negative electrode sheet may include a negative electrode current collector and a negative electrode active material provided on at least one surface of the negative electrode current collector.

In an example, the negative electrode current collector is provided with two surfaces opposite in its thickness direction, and the negative electrode active material is provided on either or both of the two opposite surfaces of the negative electrode current collector.

In an example, the negative electrode active material may be a negative electrode active material known in the art for battery cells. In an example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon oxide compound, silicon-carbon composite, silicon-nitrogen composite, and silicon alloy. The tin-based material may be selected from at least one of elemental tin, tin oxide compound, and tin alloy. However, this application is not limited to these materials, and other conventional materials that can be used as negative electrode active materials for batteries may also be used. These negative electrode active materials may be used alone or in combination of two or more.

In some embodiments, a material of the positive electrode current collector may be aluminum, and a material of the negative electrode current collector may be copper.

In some embodiments, the electrode assembly further includes a separator, and the separator is provided between the positive electrode and the negative electrode.

In some embodiments, the separator is a separator film. Any known separator film with a porous structure has good chemical stability and mechanical stability may be selected for the separator film in this application.

In an example, a main material of the separator film may be selected from at least one of glass fiber, non-woven fabric, polyethylene, polypropylene, polyvinylidene fluoride, and ceramic. The separator film may be a single-layer film or a multi-layer composite film. When the separator film is a multi-layer composite film, materials of the layers may be the same or different. The separator may be a separate component located between the positive electrode and the negative electrode, or may be attached to the surface of the positive electrode or negative electrode.

In some embodiments, the separator is a solid electrolyte. The solid electrolyte is provided between the positive electrode and the negative electrode, and transports ions while separating the positive and negative electrodes.

In some embodiments, the battery cell further includes an electrolyte, and the electrolyte conducts ions between the positive electrode and the negative electrode. The electrolyte may be selected based on needs in this application. The electrolyte may be liquid, gel, or solid.

The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalatoborate, lithium bisoxalatoborate, lithium difluorobisoxalatophosphate, and lithium tetrafluorooxalatophosphate.

In some embodiments, a solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may alternatively be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as a skeleton network of the electrolyte, combined with ionic liquid-lithium salt.

The solid electrolyte includes polymer solid electrolyte, inorganic solid electrolyte, and composite solid electrolyte.

In an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid electrolyte may be one or more of oxide solid electrolyte (crystalline perovskite, sodium super ionic conductor, garnet, and amorphous LiPON film), sulfide solid electrolyte (crystalline lithium super ionic conductor (lithium germanium phosphorus sulfide and silver germanium sulfide mineral), and amorphous sulfide), halide solid electrolyte, nitride solid electrolyte, and hydride solid electrolyte.

In an example, the composite solid electrolyte is formed by adding inorganic solid electrolyte filler to the polymer solid electrolyte.

In some embodiments, the electrode assembly is a wound structure. The positive electrode sheet and the negative electrode sheet are wound into a wound structure.

In some embodiments, the electrode assembly is a stacked structure.

In an example, a plurality of positive electrode sheets and a plurality of negative electrode sheets may be provided, and the plurality of positive electrode sheets and the plurality of negative electrode sheets are alternately stacked.

In an example, a plurality of positive electrode sheets may be provided, the negative electrode sheet is folded to form a plurality of stacked folded segments, and one positive electrode sheet is sandwiched between adjacent folded segments.

In an example, both the positive electrode sheet and the negative electrode sheet are folded to form a plurality of stacked folded segments.

In an example, a plurality of separators may be provided, separately provided between any adjacent positive electrode sheet or negative electrode sheet.

In an example, the separator may be continuously provided between any adjacent positive electrode sheet or negative electrode sheet by folding or winding.

In some embodiments, a shape of the electrode assembly may be cylindrical, flat, polygonal prism, or the like.

In some embodiments, the electrode assembly is provided with a tab, and the tab can lead current out of the electrode assembly. The tab includes a positive tab and a negative tab.

In some embodiments, the battery cell may include a casing. The casing is configured to encapsulate the electrode assembly, electrolyte, and other components. The casing may be a steel casing, an aluminum casing, a plastic casing (such as polypropylene), a composite metal casing (such as copper-aluminum composite casing), an aluminum-plastic film, or the like.

In an example, the battery cell may be a cylindrical battery cell, a prismatic battery cell, a pouch battery cell, or a battery cell of other shapes. The prismatic battery cell includes a prismatic battery cell, a blade-shaped battery cell, a polygonal prism battery cell. For example, the polygonal prism battery cell may be a hexagonal prism battery cell or the like.

The battery mentioned in the embodiments of this application refers to a single physical module including one or more battery cells to provide a higher voltage and capacity.

In some embodiments, the battery may be a battery module, and when there are a plurality of battery cells, the plurality of battery cells are arranged and fastened to form a battery module.

In some embodiments, the battery may be a battery pack, the battery pack includes a box and a battery cell, and the battery cell or battery module is accommodated in the box.

In some embodiments, the box may be part of a chassis structure of a vehicle. For example, part of the box may become at least part of a floor of the vehicle, or part of the box may become at least part of a crossbeam and a longitudinal beam of the vehicle.

In some embodiments, the battery may be an energy storage apparatus. The energy storage apparatus includes an energy storage container, an energy storage electric cabinet, and the like.

In some embodiments, the battery cell generally includes an electrode assembly, an electrode terminal, and a casing. The electrode assembly is electrically connected to the outside through an electrode terminal. The casing can accommodate the electrode assembly and provide protection and support for the electrode assembly.

Generally, the electrode terminal needs to be connected to a component inside the casing to achieve electrical connection between the electrode terminal and the electrode assembly. The electrode terminal is usually connected to the component and then mounted in the casing. However, during connection of the electrode terminal with the component, particles attached to the electrode terminal may be generated; after the particles enter the casing, the separator may be easily pierced, posing a short circuit risk, affecting the reliability of the battery cell.

In view of this, the embodiments of this application provide a battery cell, on which connection between an electrode terminal and a component inside the casing is achieved from the outside of the electrode terminal by providing a recessed portion on the electrode terminal, reducing particles entering the casing, lowering a short circuit risk, and improving reliability.

The battery cell described in the embodiments of this application is applicable to a battery and an electrical apparatus using the battery.

The battery cell disclosed in the embodiments of this application may be used in an electrical apparatus using a battery as a power source or in various energy storage systems using a battery as an energy storage element. The electrical apparatus may be, but is not limited to, a mobile phone, a tablet, a laptop, an electric toy, an electric tool, an electric bicycle, an electric vehicle, a ship, a spacecraft, and the like. The electric toy may include a fixed or mobile electric toy, such as a game console, an electric car toy, an electric ship toy, an electric airplane toy, or the like, and the spacecraft may include an airplane, a rocket, a space shuttle, a spaceship, or the like.

For convenience of explanation, in the following embodiments, a vehicle is described as an example of the electrical apparatus.

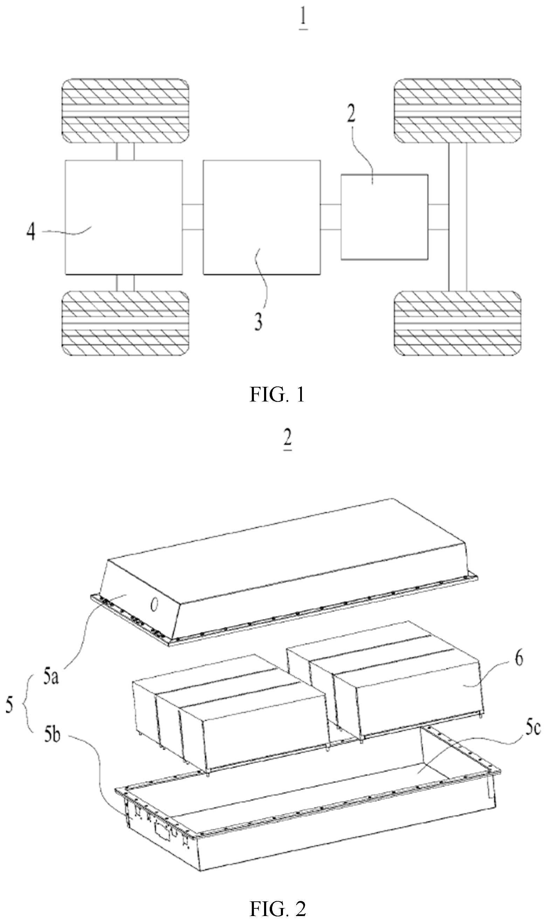

FIG. 1 is a schematic structural diagram of a vehicle provided in some embodiments of this application.

As shown in FIG. 1, a battery 2 is provided inside a vehicle 1, and the battery 2 may be provided at a bottom or head or tail of the vehicle 1. The battery 2 may be used for power supply of the vehicle 1, for example, the battery 2 may serve as an operating power source of the vehicle 1.

The vehicle 1 may further include a controller 3 and a motor 4. The controller 3 is configured to control the battery 2 to supply power to the motor 4, for example, satisfying the operating power requirements during startup, navigation, and driving of the vehicle 1.

In some embodiments of this application, the battery 2 can not only serve as an operating power source of the vehicle 1 but also as a driving power source of the vehicle 1, completely or partially replacing fuel or natural gas to provide driving power for the vehicle 1.

FIG. 2 is a schematic exploded view of a battery provided in some embodiments of this application. As shown in FIG. 2, the battery 2 includes a box 5 and a battery cell (not shown in FIG. 2), and the battery cells is accommodated in the box 5.

The box 5 is configured to accommodate the battery cell, and the box 5 may be in various structures. In some embodiments, the box 5 may include a first box portion 5a and a second box portion 5b. The first box portion 5a and the second box portion 5b are engaged with each other. The first box portion 5a and the second box portion 5b jointly define an accommodating space 5c for accommodating the battery cell. The second box portion 5b may be a hollow structure with one end open. The first box portion 5a is a plate-shaped structure, and the first box portion 5a covers the open side of the second box portion 5b to form the box 5 having the accommodating space 5c. Alternatively, the first box portion 5a and the second box portion 5b may both be hollow structures with one side open, and the open side of the first box portion 5a covers the open side of the second box portion 5b to form the box 5 having the accommodating space 5c. Certainly, the first box portion 5a and the second box portion 5b may be of various shapes, such as cylinder or cuboid.

To improve the sealing after the first box portion 5a and the second box portion 5b are connected, a sealing member, such as sealant or sealing ring, may also be provided between the first box portion 5a and the second box portion 5b.

Assuming that the first box portion 5a covers a top of the second box portion 5b, the first box portion 5a may also be referred to as an upper box cover, and the second box portion 5b may also be referred to as a lower box.

In the battery 2, there may be one or a plurality of battery cells. If there are a plurality of battery cells, the plurality of battery cells may be connected in series, parallel, or series-parallel, where series-parallel connection means that the plurality of battery cells are connected in both series and parallel. The plurality of battery cells may be directly connected in series, parallel, or series-parallel, and then an entirety formed by the plurality of battery cells is accommodated in the box 5. Certainly, a plurality of battery cells may alternatively be first connected in series, parallel, or series-parallel to form a battery module 6, and then a plurality of battery modules 6 are connected in series, parallel, or series-parallel to form an entirety accommodated in the box 5.

The battery cell may be the smallest unit constituting the battery.

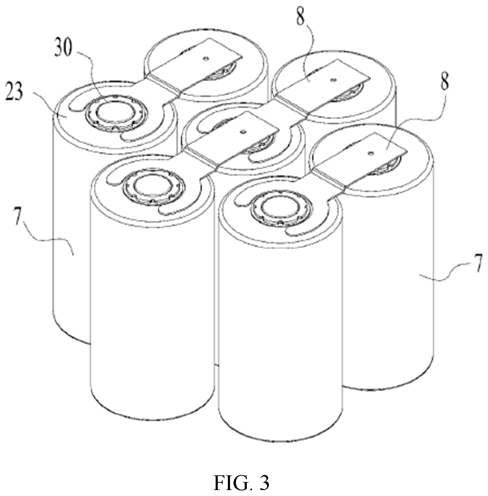

FIG. 3 is a schematic structural diagram of the battery module shown in FIG. 2.

In some embodiments, as shown in FIG. 3, there are a plurality of battery cells 7, and the plurality of battery cells 7 are first connected in series, parallel, or series-parallel to form a battery module 6. A plurality of battery modules 6 are then connected in series, parallel, or series-parallel to form an entirety accommodated in the box.

In some embodiments, the battery module 6 includes a busbar component 8, and the busbar component 8 is connected to the battery cells 7.

For example, the plurality of battery cells 7 of the battery module 6 may be electrically connected through the busbar component 8 to achieve parallel, series, or series-parallel connection of the plurality of battery cells 7 in the battery module 6. There may be one or a plurality of busbar components 8, and each busbar component 8 is configured to electrically connect at least two battery cells 7.

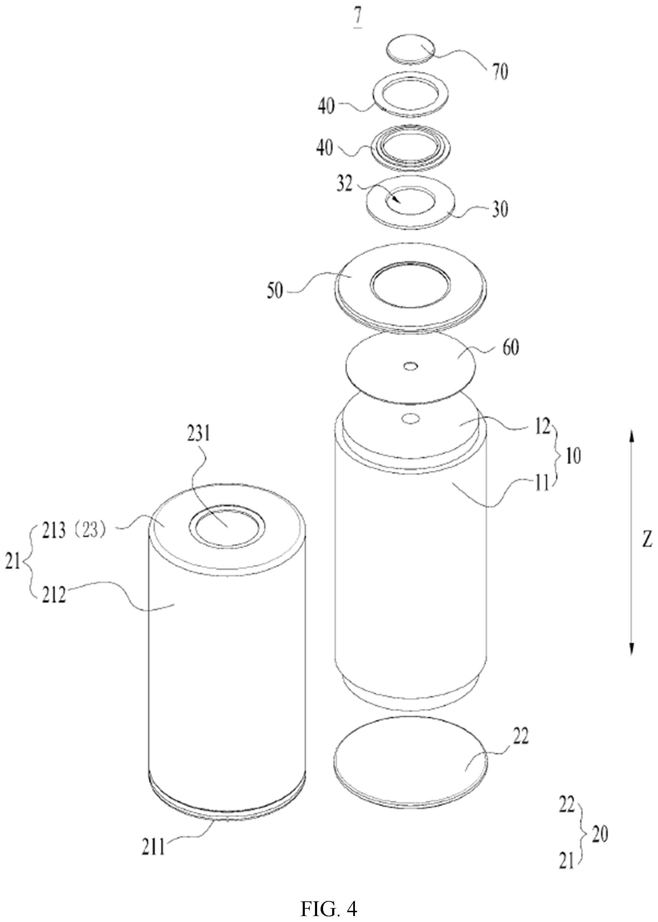

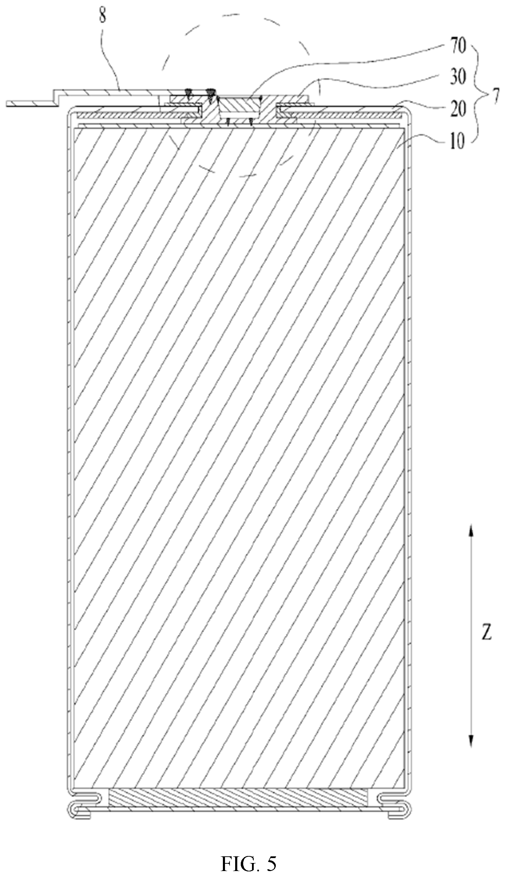

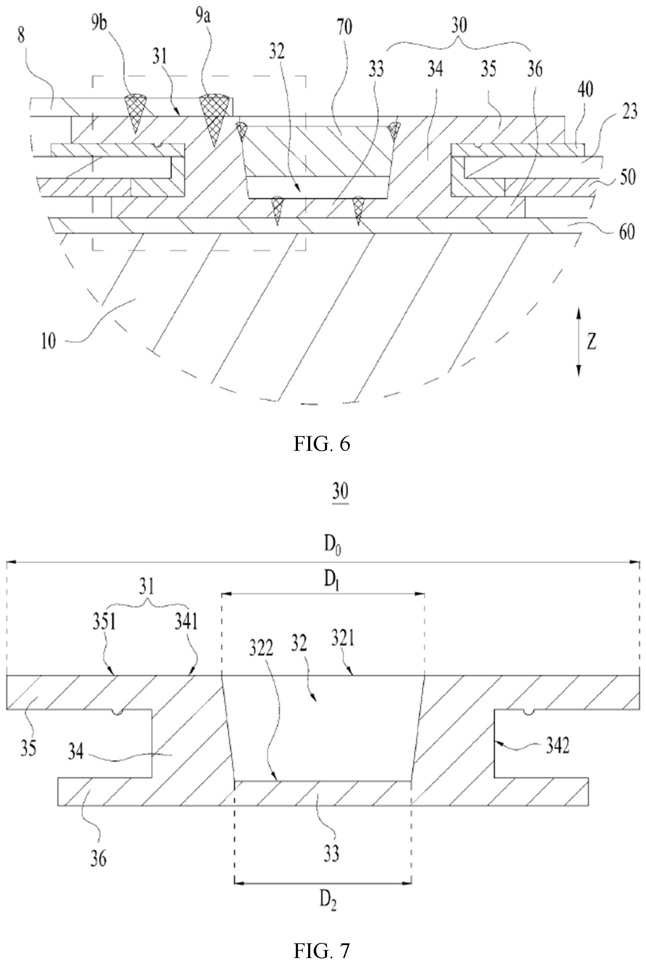

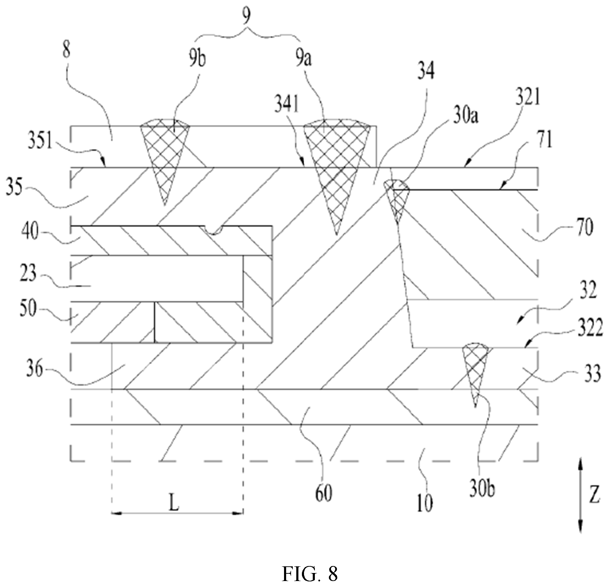

FIG. 4 is a schematic exploded view of a battery cell provided in some embodiments of this application; FIG. 5 is a schematic cross-sectional view of a battery cell and a busbar component provided in some embodiments of this application; FIG. 6 is a schematic enlarged view at a circular frame in FIG. 5; FIG. 7 is a schematic cross-sectional view of an electrode terminal of a battery cell provided in some embodiments of this application; and FIG. 8 is a schematic enlarged view at a square frame in FIG. 6.

Refer to FIG. 4 to FIG. 8. An embodiment of this application provides a battery cell 7, including a casing 20 and an electrode assembly 10. The electrode assembly 10 is accommodated in the casing 20.

The casing 20 may be a hollow structure with a cavity formed inside for accommodating the electrode assembly 10 and electrolyte. A shape of the casing 20 may be determined based on a specific shape of the electrode assembly 10. For example, if the electrode assembly 10 is a cuboid structure, a cuboid casing may be selected; or if the electrode assembly 10 is a cylindrical structure, a cylindrical casing may be selected.

In some embodiments, the casing 20 includes a casing body 21 and an end cover 22, the casing body 21 is provided with a casing opening 211, and the end cover 22 covers the casing opening 211.

The casing body 21 is a component that cooperates with the end cover 22 to form an internal cavity of the battery cell 7, and the formed internal cavity may be configured to accommodate the electrode assembly 10, electrolyte, and other components.

The casing body 21 and the end cover 22 may be independent components. For example, the casing opening 211 may be provided on the casing body 21, and the end cover 22 covers the casing opening 211 at the casing opening 211 to form the internal cavity of the battery cell 7.

The casing body 21 may be of various shapes and dimensions, such as cuboid, cylinder, and hexagonal prism. Specifically, the shape of the casing body 21 may be determined based on the specific shape and dimension of the electrode assembly 10. The casing body 21 may be made of various materials, such as copper, iron, aluminum, stainless steel, aluminum alloy, and plastic, which is not particularly limited in the embodiments of this application.

A shape of the end cover 22 may be adapted to the shape of the casing body 21 to fit the casing body 21. A material of the end cover 22 may be the same as or different from the material of the casing body 21. Optionally, the end cover 22 may be made of a material with certain hardness and strength (such as copper, iron, aluminum, stainless steel, aluminum alloy, and plastic), so that the end cover 22 is less likely to deform when subjected to squeeze and collision, enabling the battery cell 7 to have higher structural strength and improved reliability.

The end cover 22 is connected to the casing body 21 by welding, bonding, snapping, or other means.

In some embodiments, the casing body 21 is a steel casing or an aluminum casing. In an example, the material of the casing body 21 may be stainless steel, nickel-plated steel, or other steel-based materials.

In some examples, the casing body 21 is provided with a casing opening 211 on one side, and one end cover 22 is provided covering the casing body 21. In other examples, the casing body 21 is provided with casing openings 211 on two sides, two end covers 22 are provided, and the two end covers 22 respectively cover the two casing openings 211 of the casing body 21.

The electrode assembly 10 may be a component in the battery cell 7 where electrochemical reactions occur. The casing 20 may contain one or more electrode assemblies 10.

In an example, the electrode assembly 10 includes a positive electrode sheet and a negative electrode sheet. Portions of the positive electrode sheet and the negative electrode sheet having active material forms a body portion 11 of the electrode assembly 10, and portions of the positive electrode sheet and the negative electrode sheet without active material each form a tab 12. The tab 12 may include a positive tab and a negative tab. The positive tab and the negative tab may be located together at one end of the body portion 11 or respectively at two ends of the body portion 11.

In some embodiments, the battery cell 7 further includes an electrode terminal 30 provided on the casing 20. The electrode terminal 30 may be used for electrically connection with the electrode assembly 10 for outputting or inputting electrical energy of the battery cell 7.

For example, the electrode terminal 30 may be provided on the end cover 22 or on the casing body 21.

In some embodiments, the electrode assembly 10 includes a tab 12, and the electrode terminal 30 is electrically connected to the tab 12.

During charge and discharge of the battery, the positive electrode active material and the negative electrode active material react with the electrolyte, and the tab 12 is connected to the electrode terminal 30 to form a current loop.

In some embodiments, the battery cell 7 includes a casing 20, an electrode assembly 10, and an electrode terminal 30. The casing 20 includes a wall portion 23. The electrode assembly 10 is accommodated in the casing 20 and includes a tab 12. The electrode terminal 30 is provided on the wall portion 23. A side of the electrode terminal 30 away from the electrode assembly 10 along a thickness direction Z of the wall portion is provided with an outer surface 31. The electrode terminal 30 is provided with a recessed portion 32 recessed from the outer surface 31. The electrode terminal 30 includes a connection portion 33 provided at a bottom of the recessed portion 32, and the connection portion 33 is electrically connected to the tab 12.

In an example, the wall portion 23 may be the end cover 22 or a wall of the casing body 21.

In an example, a shape of the wall portion 23 may be circular, rectangular, elliptical, or other shapes.

In an example, the tab 12 electrically connected to the electrode terminal 30 may be a positive tab or a negative tab.

In an example, the connection portion 33 may be directly connected to the electrode terminal 30, for example, by welding, abutting, or other means to connect to the electrode terminal 30, achieving electrical connection between the tab 12 and the electrode terminal 30. Alternatively, the connection portion 33 may alternatively be indirectly connected to the electrode terminal 30 through another conductive component (such as current collecting member), achieving electrical connection between the tab 12 and the electrode terminal 30.

In an example, the outer surface 31 may be a flat surface or a curved surface, optionally, the outer surface 31 is a flat surface perpendicular to the thickness direction Z.

In an example, in the thickness direction Z, a projection of the outer surface 31 may surround the entire circumference of a projection of the recessed portion 32; alternatively, in the thickness direction Z, a projection of the outer surface 31 may be connected to part of an edge of a projection of the recessed portion 32.

In the embodiments of this application, since the recessed portion 32 is provided, a dimension of the connection portion 33 in the thickness direction Z can be reduced, facilitating connection of the connection portion 33 with a component inside the casing 20 from the outside of the connection portion 33, reducing the risk that particles remaining on the connection portion 33 enter the casing 20, improving reliability.

For example, since the recessed portion 32 is provided, a dimension of the connection portion 33 in the thickness direction Z can be reduced, thereby allowing welding from the outside of the connection portion 33 to achieve welding of the connection portion 33 with the component inside the casing 20. During welding, the casing can block metal particles generated due to welding, thereby reducing the risk that particles enter the casing 20, improving reliability.

In some embodiments, the connection portion 33 may be connected to a component inside the casing 20 by welding.

In some embodiments, the outer surface 31 of the electrode terminal 30 is configured to contact and connect to a busbar component 8 of the battery.

In an example, the electrode terminal 30 and the busbar component 8 may be connected by snapping, welding, or other means.

The outer surface 31 of the electrode terminal 30 directly contacts and connects to the busbar component 8. At least part of the current can be transmitted directly between the electrode terminal 30 and the busbar component 8 without passing through another component, thereby shortening a conductive path between the electrode terminal 30 and the busbar component 8, reducing resistance, and improving a current carrying capability of the battery.

In some embodiments, the electrode terminal 30 is configured to be welded to the busbar component 8 to form a first welding portion 9. The first welding portion 9 formed by welding can reduce the resistance between the electrode terminal 30 and the busbar component 8, improve the current carrying capability, and enhance connection strength between the electrode terminal 30 and the busbar component 8.

In an example, the electrode terminal 30 is connected to the busbar component 8 by ultrasonic welding or laser welding, or by using other welding methods.

Optionally, the electrode terminal 30 is connected to the busbar component 8 by laser welding. For example, laser irradiates the busbar component 8, part of the busbar component 8 and part of the electrode terminal 30 melt and form a melt pool, and the melt pool solidifies to form the first welding portion 9.

In an example, the first welding portion 9 may include at least one of a dot weld mark, a linear weld mark, a C-shaped weld mark, a V-shaped weld mark, and a spiral weld mark.

In some embodiments, the busbar component 8 and the electrode terminal 30 partially overlap in the thickness direction Z, and a part where the busbar component 8 and the electrode terminal 30 overlap is welded to form the first welding portion 9.

In some embodiments, projections of the first welding portion 9 and the recessed portion 32 in the thickness direction Z of the wall portion do not overlap. During welding, the electrode terminal 30 can restrict melt formed after melting of the busbar component 8, reducing a risk that the melt flows into the recessed portion 32, reducing a possibility that the busbar component 8 is welded through to form a through hole, improving the current carrying capability of the first welding portion 9, improving the reliability of the battery cell 7.

In some embodiments, a polarity of the wall portion 23 is opposite to a polarity of the electrode terminal 30. Optionally, the electrode terminal 30 is electrically connected to the positive tab, and the wall portion 23 is electrically connected to the negative tab.

In some embodiments, the wall portion 23 is provided with an electrode lead-out hole 231, and the electrode lead-out hole 231 penetrates the wall portion 23 along the thickness direction Z.

For example, the electrode lead-out hole 231 penetrates the wall portion 23 to facilitate leading the electrical energy of the electrode assembly 10 to the outside of the casing 20 through the electrode terminal 30.

A central axis of the electrode lead-out hole 231 may be parallel to the thickness direction Z or at a certain angle with the thickness direction Z.

In some embodiments, the electrode terminal 30 is provided on the wall portion 23 and covers at least part of the electrode lead-out hole 231.

The electrode terminal 30 may cover only part of the electrode lead-out hole 231 or completely cover the electrode lead-out hole 231. In an example, the electrode terminal 30 may alone seal the electrode lead-out hole 231 to separate an internal space of the casing 20 from an external space, improving the sealing of the battery cell 7; alternatively, the electrode terminal 30 may cooperate with other functional components (such as sealing member) to jointly seal the electrode lead-out hole 231 to separate an internal space of the casing 20 from an external space, improving the sealing of the battery cell 7.

In some embodiments, the electrode terminal 30 further includes a terminal body 34 and a first limiting portion 35, the outer surface 31 of the electrode terminal 30 includes a first outer surface 341 of the terminal body 34 and a second outer surface 351 of the first limiting portion 35, the recessed portion 32 is recessed from the first outer surface 341 toward the electrode assembly 10, the terminal body 34 is at least partially accommodated in the electrode lead-out hole 231, the first limiting portion 35 is located on a side of the wall portion 23 away from the electrode assembly 10 and connected to an outer peripheral surface 342 of the terminal body 34, and the connection portion 33 is connected to the terminal body 34.

In an example, the terminal body 34 and the first limiting portion 35 may be integrally formed; alternatively, the terminal body 34 and the first limiting portion 35 are separately formed and connected by snapping, welding, bonding, or other means.

In an example, the first outer surface 341 and the second outer surface 351 may be coplanar or not coplanar. Optionally, the first outer surface 341 and the second outer surface 351 are in the same plane; optionally, both the first outer surface 341 and the second outer surface 351 are perpendicular to the thickness direction Z.

In an example, the connection portion 33 and the terminal body 34 jointly define the recessed portion 32.

There may be one or a plurality of first limiting portions 35. Optionally, there is one first limiting portion 35, and the first limiting portion 35 is an annular structure. There are a plurality of first limiting portions 35, and the plurality of first limiting portions 35 are spaced along a circumferential direction of the terminal body 34.

With the terminal body 34 extending into the electrode lead-out hole 231, connection of the connection portion 33 with another component inside the casing 20 can be facilitated. The wall portion 23 can form a stop for the first limiting portion 35, thereby reducing the risk that the electrode terminal 30 falls into the casing 20 through the electrode lead-out hole 231.

In some embodiments, the terminal body 34 surrounds the connection portion 33.

In some embodiments, along the thickness direction Z of the wall portion, a dimension of the terminal body 34 is greater than a dimension of the first limiting portion 35, and the first outer surface 341 is configured to contact and connect to the busbar component 8 of the battery.

For example, along the thickness direction Z of the wall portion, the minimum dimension of the terminal body 34 is greater than the maximum dimension of the first limiting portion 35.

The second outer surface 351 may be connected to the busbar component 8 or not connected to the busbar component 8.

The terminal body 34 is connected to the connection portion 33, and the busbar component 8 contacts and connects to the first outer surface 341. This can shorten the conductive path between the busbar component 8 and the connection portion 33, reduce resistance, reduce heat generation, alleviate temperature rise of the electrode terminal 30 and the busbar component 8, and improve the reliability of the battery cell 7. The terminal body 34 has a larger dimension relative to the first limiting portion 35, and connecting the terminal body 34 with the busbar component 8 can reduce the risk of cracking of the electrode terminal 30 when connected to the busbar component 8, improving the reliability of the battery cell 7.

In some embodiments, the busbar component 8 is welded to the terminal body 34. The terminal body 34 has a larger dimension in the thickness direction Z of the wall portion, and welding the busbar component 8 to the terminal body 34 can reduce the risk of welding through the electrode terminal 30.

In some embodiments, the busbar component 8 contacts the first outer surface 341, and at least part of the first welding portion 9 is formed on the terminal body 34.

In the thickness direction Z, a projection of the first welding portion 9 may be entirely within a projection of the terminal body 34 or only partially within the projection of the terminal body 34.

Forming at least part of the first welding portion 9 on the terminal body 34 can provide the first welding portion 9 with a larger dimension in the thickness direction Z of the wall portion, thereby enhancing the connection strength between the busbar component 8 and the electrode terminal 30, reducing the risk of separation between the busbar component 8 and the electrode terminal 30, improving the capability of current carrying between the busbar component 8 and the electrode terminal 30, improving the reliability of the battery cell 7.

In some embodiments, the busbar component 8 also contacts the second outer surface 351 to increase a contact area between the busbar component 8 and the electrode terminal 30 and reduce resistance.

In some embodiments, part of the first welding portion 9 is formed on the first limiting portion 35 to reduce contact resistance between the first limiting portion 35 and the busbar component 8, further improving the capability of current carrying between the electrode terminal 30 and the busbar component 8, reducing heat generation, improving the reliability of the battery.

In some embodiments, the first welding portion 9 includes a first weld mark 9a and a second weld mark 9b, the first weld mark 9a is formed on the terminal body 34 and the busbar component 8, and the second weld mark 9b is formed on the first limiting portion 35 and the busbar component 8.

For example, the projection of the first weld mark 9a along the thickness direction Z is within the projection of the terminal body 34 along the thickness direction Z, and a projection of the second weld mark 9b along the thickness direction Z is within a projection of the first limiting portion 35 along the thickness direction Z.

There may be one or a plurality of first weld marks 9a. There may be one or a plurality of second weld marks 9b.

Both the first weld mark 9a and the second weld mark 9b can transmit current between the electrode terminal 30 and the busbar component 8, thereby improving the current carrying capability between the electrode terminal 30 and the busbar component 8, reducing heat generation, improving the reliability of the battery.

In some embodiments, in the thickness direction Z, the maximum dimension of the first weld mark 9a is greater than the maximum dimension of the second weld mark 9b. Compared with the second weld mark 9b, the first weld mark 9a has a larger dimension in the thickness direction Z, thereby improving the connection strength and the capability of current carrying between the terminal body 34 and the busbar component 8. Compared with the first weld mark 9a, the second weld mark 9b has a smaller dimension in the thickness direction Z, thereby reducing the risk of melting through the first limiting portion 35, improving the reliability of the battery cell 7.

In some embodiments, in the thickness direction Z, the maximum dimension of the first weld mark 9a is greater than the dimension of the first limiting portion 35.

In some embodiments, the electrode terminal 30 further includes a second limiting portion 36, and the second limiting portion 36 is located on a side of the wall portion 23 facing the electrode assembly 10 and protrudes from the outer peripheral surface 342 of the terminal body 34.

In an example, the terminal body 34 and the second limiting portion 36 may be integrally formed; alternatively, the terminal body 34 and the second limiting portion 36 are separately formed and connected by snapping, welding, bonding, or other means.

The wall portion 23 may be limited between the first limiting portion 35 and the second limiting portion 36 to restrict relative movement between the electrode terminal 30 and the wall portion 23, reducing a force at the connection between the electrode terminal 30 and the busbar component 8 when the battery is subjected to external impact, reducing a risk of battery failure.

In some embodiments, the second limiting portion 36 and the wall portion 23 overlap in a region in the thickness direction Z. Optionally, in a radial direction of the electrode lead-out hole 231, a width L of the overlapping region between the second limiting portion 36 and the wall portion 23 is 1.5 mm to 5 mm.

The radial direction of the electrode lead-out hole 231 may be a direction passing through the central axis of the electrode lead-out hole 231 and perpendicular to the central axis of the electrode lead-out hole 231. Optionally, the central axis of the electrode lead-out hole 231 is parallel to the thickness direction Z of the wall portion.

Limiting L to a value greater than or equal to 1.5 mm reduces the risk that the electrode terminal 30 detaches from the wall portion 23 through the electrode lead-out hole 231. Limiting L to a value less than or equal to 5 mm can reduce space occupation and weight of the second limiting portion 36, increasing the energy density, and simplifying processing of the electrode terminal 30.

For example, the overlapping region between the second limiting portion 36 and the wall portion 23 is annular, and the width L is an annular width of the overlapping region.

For example, L is 0.5 mm, 1 mm, 1.5 mm, 2 mm, 2.5 mm, 3 mm, 3.5 mm, 4 mm, 4.5 mm, or 5 mm.

In some embodiments, the terminal body 34, the first limiting portion 35, the second limiting portion 36, and the connection portion 33 are integrally formed to reduce the resistance to current transmission inside the electrode terminal 30 and reduce the resistance between the busbar component 8 and the tab 12. According to the embodiments of this application, the overall structural strength of the electrode terminal 30 can also be improved.

In some embodiments, in the radial direction of the electrode lead-out hole 231, an end of the first limiting portion 35 away from the terminal body 34 extends beyond an end of the second limiting portion 36 away from the terminal body 34.

In the radial direction of the electrode lead-out hole 231, the first limiting portion 35 has a larger dimension than the second limiting portion 36, which can increase an exposed area of the electrode terminal 30, facilitate contact between the electrode terminal 30 and the external busbar component 8, increase the connection area between the electrode terminal 30 and the busbar component 8, and improve current carrying capability.

In some embodiments, the battery cell 7 further includes a sealing member 40, and at least part of the sealing member 40 is provided between the second limiting portion 36 and the wall portion 23.

In an example, the electrode terminal 30 and the sealing member 40 jointly separate the internal space and external space of the casing 20 to improve the sealing of the battery cell 7.

The sealing member 40 can fill a gap between the second limiting portion 36 and the wall portion 23 to seal the electrode lead-out hole 231.

In some embodiments, the part of the sealing member 40 sandwiched between the second limiting portion 36 and the wall portion 23 is compressed to seal the electrode lead-out hole 231.

In some embodiments, part of the sealing member 40 is provided between the first limiting portion 35 and the wall portion 23.

In some embodiments, part of the sealing member 40 is provided for the electrode lead-out hole 231 and separates the hole wall of the electrode lead-out hole 231 from the terminal body 34.

In some embodiments, the sealing member 40 is made of an insulating material. The sealing member 40 can isolate the wall portion 23 from the electrode terminal 30 for insulation.

In some embodiments, the battery cell 7 further includes an insulating component 50. The insulating component 50 is provided on a surface of the wall portion 23 facing the electrode assembly 10. The insulating component 50 may be configured to isolate at least part of the electrode assembly 10 from the wall portion 23 for insulation.

In some embodiments, a projection of the wall portion 23 along the thickness direction Z is annular. Optionally, the battery cell 7 is a cylindrical battery cell.

In some embodiments, the casing body 21 includes a side wall 212 and an end wall 213, the side wall 212 surrounds an outer side of the electrode assembly 10, and the end wall 213 is disposed opposite the casing opening 211. The wall portion 23 is the end cover 22 or the end wall 213. For example, the side wall 212 and the end wall 213 are integrally formed.

There may be one or a plurality of side walls 212. In some examples, one side wall 212 is provided and is a cylindrical structure. In other examples, a plurality of side walls 212 are provided, and the plurality of side walls 212 are sequentially connected along the circumferential direction of the electrode assembly 10. For example, four side walls 212 are provided, and the four side walls 212 are sequentially connected to form a square tubular structure.

In some embodiments, the battery cell 7 is a cylindrical battery cell, and one cylindrical side wall 212 is provided. Since the end cover 22 or the end wall 213 is flatter than the side wall 212, providing the electrode terminal 30 on the end cover 22 or the end wall 213 can improve assembly efficiency of the battery cell 7.

In some embodiments, the casing body 21 is integrally formed, and the wall portion 23 is the end wall 213.

In some embodiments, the battery cell 7 further includes a current collecting member 60, and the current collecting member 60 connects the tab 12 and the connection portion 33.

The current collecting member 60 may be connected to the tab 12 by welding, abutting, bonding, or other means, and connected to the connection portion 33 by welding, abutting, bonding, or other means to achieve electrical connection between the electrode terminal 30 and the tab 12.

The current collecting member 60 is made of a conductive material, for example, the current collecting member 60 is made of a conductive metal.

In some embodiments, a surface of the current collecting member 60 away from the wall portion 23 abuts the tab 12, and a surface of the current collecting member 60 facing the wall portion 23 abuts the connection portion 33.

In some embodiments, the current collecting member 60 is welded to the tab 12. In an example, the current collecting member 60 is connected to the tab 12 by ultrasonic welding, laser welding, or other welding methods.

In some embodiments, the current collecting member 60 is welded to the connection portion 33. In an example, the current collecting member 60 is connected to the connection portion 33 by laser welding, resistance welding, ultrasonic torque welding, or other welding methods.

In some embodiments, the battery cell 7 further includes a cover plate 70, the recessed portion 32 is provided with an opening 321, and the cover plate 70 covers the opening 321 and is connected to the electrode terminal 30.

For example, the cover plate 70 is configured to separate the connection portion 33 from a space outside the cover plate 70.

For example, at least part of the cover plate 70 extends into the opening 321 to cover the opening 321; alternatively, the cover plate 70 may be entirely located outside the opening 321 and cover the opening 321 in the thickness direction Z.

The cover plate 70 can shield the connection portion 33, reducing a risk that the connection portion 33 is corroded by external impurities, improving the stability and reliability of the connection between the connection portion 33 and a component inside the casing 20.

The busbar component 8 is directly connected to the electrode terminal 30 without needing to connect to the cover plate 70, thereby shortening the conductive path between the tab 12 and the busbar component 8, reducing resistance.

In some embodiments, at least part of the cover plate 70 is accommodated in the recessed portion 32. Accommodating the cover plate 70 with the recessed portion 32 can reduce a dimension by which the cover plate 70 protrudes from the outer surface 31 of the electrode terminal 30, thereby reducing the maximum dimension of the battery cell 7 in the thickness direction Z of the wall portion, improving space utilization, increasing the energy density of the battery.

In some embodiments, the cover plate 70 is welded to the electrode terminal 30 to form a second welding portion 30a.

For example, the second welding portion 30a can seal a space between the cover plate 70 and the connection portion 33, reducing the corrosion risk of the connection portion 33.

For example, the cover plate 70 is connected to the electrode terminal 30 by laser welding.

For example, the busbar component 8 is connected to the electrode terminal 30, thereby reducing current flowing through the second welding portion 30a, reducing heat generation, improving the reliability of the battery cell 7.

In some embodiments, the second welding portion 30a is annular.

In some embodiments, the cover plate 70 is welded to the terminal body 34.

In some embodiments, along a direction from the electrode assembly 10 toward the wall portion 23, the second welding portion 30a does not protrude from the outer surface 31.

For example, "along a direction from the electrode assembly 10 toward the wall portion 23" refers to a direction parallel to the thickness direction Z of the wall portion.

When the busbar component 8 contacts the outer surface 31, the second welding portion 30a is less likely to contact the busbar component 8, thereby reducing the risk of interference between the second welding portion 30a and the busbar component 8, reducing gaps between the busbar component 8 and the outer surface 31, increasing a current carrying area and the connection strength between the busbar component 8 and the electrode terminal 30.

In some embodiments, along the direction from the electrode assembly 10 toward the wall portion 23, the second welding portion 30a is spaced from the outer surface 31 by a preset distance to further reduce the risk of interference between the second welding portion 30a and the busbar component 8.

In some embodiments, the cover plate 70 is entirely accommodated in the recessed portion 32, a side of the cover plate 70 away from the connection portion 33 is provided with a third outer surface 71, and in the thickness direction Z, the third outer surface 71 is closer to the connection portion 33 than the outer surface 31.

The second welding portion 30a formed by welding is uneven, and the second welding portion 30a may protrude from the third outer surface 71. The third outer surface 71 is inwardly positioned relative to the outer surface 31, thereby reducing the risk that the second welding portion 30a protrudes from the outer surface 31 in the thickness direction Z.

In some embodiments, the connection portion 33 is welded to the current collecting member 60 or the tab 12 to form a third welding portion 30b.

In some embodiments, the connection portion 33 is welded to the current collecting member 60 or the tab 12 by laser welding. Providing the recessed portion 32 can reduce the thickness of the connection portion 33. Laser externally acts on the connection portion 33, thereby reducing the risk that metal particles enter the casing 20.

In some embodiments, the cover plate 70 can separate the third welding portion 30b from a space outside the cover plate 70, reducing a risk that the third welding portion 30b is corroded by impurities.

In some embodiments, in the thickness direction Z, the third welding portion 30b is spaced from the cover plate 70 to reduce a risk that the cover plate 70 crushes the third welding portion 30b.

In some embodiments, an area of a cross-section of the recessed portion 32 perpendicular to the thickness direction Z gradually decreases along a direction away from the outer surface 31.

When the cover plate 70 is placed into the recessed portion 32, a side surface of the recessed portion 32 can support the cover plate 70 and position the cover plate 70, thereby simplifying the assembly of the cover plate 70. In addition, a tapered structure of the recessed portion 32 can also improve the fitting between the recessed portion 32 and the cover plate 70, accommodating larger dimensional fitting tolerances.

For example, the recessed portion 32 may be inverted frustum pyramid or inverted truncated cone.

For example, the side surface of the recessed portion 32 can limit the cover plate 70, thereby spacing the cover plate 70 from the third welding portion 30b.

In some embodiments, the recessed portion 32 is provided with an opening 321, the outer surface 31 surrounds the opening 321, and an area of the outer surface 31 is greater than an area of the opening 321.

The outer surface 31 has a larger area to increase the contact area between the outer surface 31 and the busbar component 8, improving the current carrying capability, reducing heat generation.

In some embodiments, the outer surface 31 is an annular plane, the opening 321 is circular, an outer diameter of the outer surface 31 is D₀, and a diameter of the opening 321 is D₁.

For example, the area of the opening 321 is π×(D₁/2)², and the area of the outer surface 31 is π×(D₀/2)²-π×(D₁/2)².

In some embodiments, the area of the opening 321 is greater than or equal to 0.01 times the area of the outer surface 31, so that an external device can connect the connection portion 33 with a component inside the casing 20 through the opening 321.

In some embodiments, the area of the opening 321 is less than or equal to 0.34 times the area of the outer surface 31, to reduce area loss of the outer surface 31 and increase the contact area between the outer surface 31 and the busbar component 8, improving current carrying capability, reducing heat generation.

In some embodiments, the area of the opening 321 is 0.01 times, 0.02 times, 0.05 times, 0.08 times, 0.1 times, 0.15 times, 0.2 times, 0.25 times, 0.3 times, or 0.34 times the area of the outer surface 31.

In some embodiments, D₁ is greater than or equal to 0.1 times D₀ and less than or equal to 0.5 times D₀. Optionally, D₁ is greater than or equal to 0.2 times D₀ and less than or equal to 0.4 times D₀.

In some embodiments, a bottom surface 322 of the recessed portion 32 corresponds to the connection portion 33, that is, a part of the electrode terminal 30 corresponding to the bottom surface 322 of the recessed portion 32 along the thickness direction Z is the connection portion 33.

In some embodiments, an area of the bottom surface 322 of the recessed portion 32 is greater than or equal to 0.01 times the area of the outer surface 31, to increase the area of the connection portion 33, improve the connection strength and the capability of current carrying between the connection portion 33 and a component inside the casing 20, and improve the reliability of the battery cell 7. For example, in the embodiments of this application, the area of the third welding portion 30b can be increased, improve the capability of current carrying between the connection portion 33 and the tab 12.

In some embodiments, the area of the bottom surface 322 of the recessed portion 32 is less than or equal to 0.34 times the area of the outer surface 31, to reduce the area loss of the outer surface 31, increase the contact area between the outer surface 31 and the busbar component 8, improve the current carrying capability, and reduce heat generation. For example, the embodiments of this application reduce the area occupied by the recessed portion 32 to satisfy a welding area requirement of the busbar component 8.

In some embodiments, the area of the bottom surface 322 of the recessed portion 32 is 0.01 times, 0.02 times, 0.05 times, 0.08 times, 0.1 times, 0.15 times, 0.2 times, 0.25 times, 0.3 times, or 0.34 times the area of the outer surface 31.

In some embodiments, the area of the bottom surface 322 of the recessed portion 32 is less than or equal to the area of the opening 321. Optionally, the area of the bottom surface 322 of the recessed portion 32 is less than the area of the opening 321.

For example, the bottom surface 322 of the recessed portion 32 is circular, a diameter of the bottom surface 322 of the recessed portion 32 is D₂, and the area of the bottom surface 322 of the recessed portion 32 is π×(D₂/2)².

In some embodiments, D₂ is greater than or equal to 0.1 times D₀ and less than or equal to 0.5 times D₀. Optionally, D₂ is greater than or equal to 0.2 times D₀ and less than or equal to 0.4 times D₀.

In some embodiments, the connection portion 33 is connected to the current collecting member 60 by laser welding to form the third welding portion 30b.

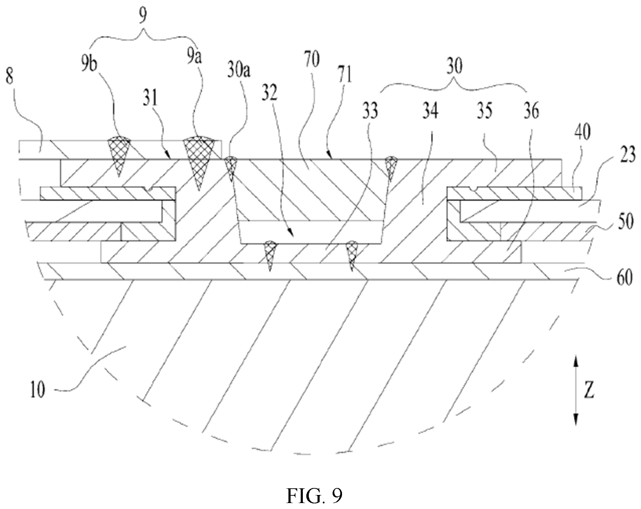

FIG. 9 is a schematic cross-sectional view of a part of a battery provided in some embodiments of this application.

Refer to FIG. 9. In some embodiments, in the thickness direction Z, the busbar component 8 does not overlap with the second welding portion 30a.

In the thickness direction Z, the busbar component 8 and the cover plate 70 may overlap or not overlap.

In the thickness direction Z, the second welding portion 30a may protrude from the outer surface 31 or not protrude from the outer surface 31.

When the busbar component 8 contacts the outer surface 31, the second welding portion 30a is less likely to interfere with the busbar component 8 in the thickness direction Z, thereby reducing the gap between the busbar component 8 and the outer surface 31, increasing the current carrying area and the connection strength between the busbar component 8 and the electrode terminal 30.

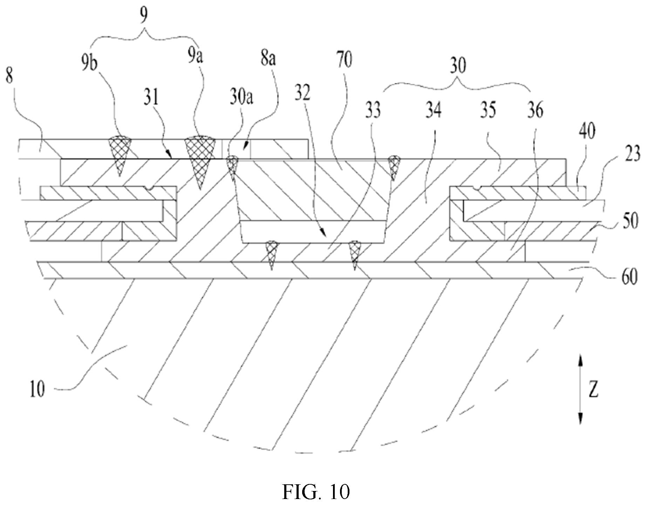

FIG. 10 is a schematic cross-sectional view of a part of a battery provided in other embodiments of this application.

As shown in FIG. 10, in some embodiments, in the thickness direction Z, the busbar component 8 partially overlaps with the cover plate 70.

In some embodiments, the second welding portion 30a protrudes from the outer surface 31 in the thickness direction Z. The busbar component 8 may be provided with an avoidance hole 8a, and the avoidance hole 8a is configured to avoid the second welding portion 30a so that the busbar component 8 does not overlap with the second welding portion 30a in the thickness direction Z.

In some embodiments, the busbar component 8 is spaced from the cover plate 70 in the thickness direction Z to reduce the risk that the busbar component 8 contacts both the outer surface 31 and the third outer surface 71, reducing over-constraint.

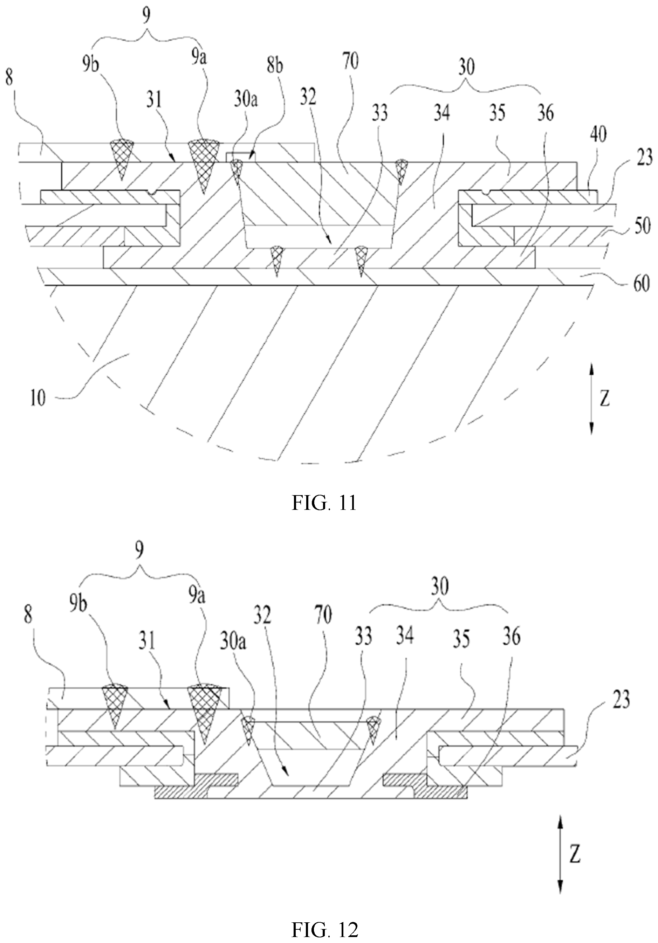

FIG. 11 is a schematic cross-sectional view of a part of a battery provided in still other embodiments of this application.

As shown in FIG. 11, in some embodiments, in the thickness direction Z, the busbar component 8 partially overlaps with the second welding portion 30a, a side of the busbar component 8 facing the second welding portion 30a is provided with an avoidance recess 8b, and the avoidance recess 8b is configured to avoid the second welding portion 30a.

Providing the avoidance recess 8b can reduce the risk of contact between the second welding portion 30a and the busbar component 8, reduce the gap between the busbar component 8 and the outer surface 31, and increase the current carrying area and the connection strength between the busbar component 8 and the electrode terminal 30.

FIG. 12 is a schematic cross-sectional view of a part of a battery provided in yet other embodiments of this application.

Refer to FIG. 12. In some embodiments, the terminal body 34 and the second limiting portion 36 are two separately formed components, and the two components are fixedly connected.

In some embodiments, the second limiting portion 36 is an annular member.

For example, the terminal body 34 is inserted into the electrode lead-out hole 231 from the outside of the wall portion 23, and the second limiting portion 36 may be sleeved on the terminal body 34 from an inner side of the wall portion 23. After the second limiting portion 36 is sleeved on the terminal body 34, the terminal body 34 is squeezed, so that the terminal body 34 deforms and forms a flange structure, thereby riveting the terminal body 34 to the second limiting portion 36.

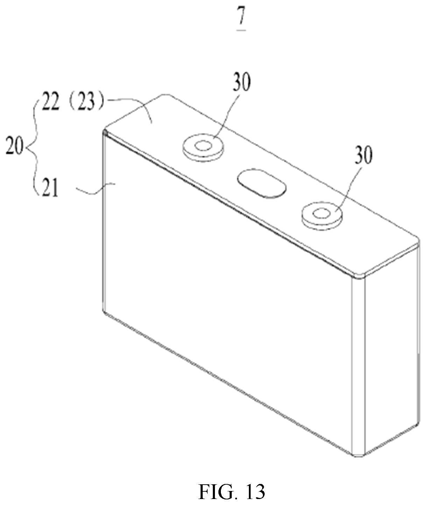

FIG. 13 is a schematic diagram of a battery cell provided in still yet other embodiments of this application.

Refer to FIG. 13. In some embodiments, the battery cell 7 is a prismatic battery cell. In some embodiments, the wall portion 23 is the end cover 22.

According to some embodiments of this application, this application further provides a battery, including a plurality of battery cells 7 in any of the above embodiments.

According to some embodiments of this application, this application further provides an electrical apparatus, including the battery in any of the above embodiments. The battery is configured to provide electrical energy for an electrical apparatus. The electrical apparatus may be any of the aforementioned devices or systems using a battery.

Refer to FIG. 4 to FIG. 8. The embodiments of this application provide a battery cell 7, including a casing 20, an electrode assembly 10, an electrode terminal 30, a cover plate 70, and a current collecting member 60.

The casing 20 includes a casing body 21 and an end cover 22, the casing body 21 is provided with a casing opening 211, and the end cover 22 covers the casing opening 211. The end cover 22 and the casing body 21 cooperate to form an internal cavity, and the electrode assembly 10 is accommodated in an internal cavity.

The casing body 21 includes a side wall 212 and an end wall 213. The side wall 212 surrounds an outer side of the electrode assembly 10. The end wall 213 is disposed opposite the casing opening 211. The end wall 213 is provided with an electrode lead-out hole 231.

The electrode assembly 10 includes a tab 12. The current collecting member 60 is located between the tab 12 and the end wall 213, and connected to the tab 12.

The electrode terminal 30 includes a terminal body 34, a first limiting portion 35, a second limiting portion 36, and a connection portion 33. The terminal body 34 is at least partially accommodated in an electrode lead-out hole 231, the first limiting portion 35 is located on a side of the wall portion 23 away from the electrode assembly 10 and connected to an outer peripheral surface 342 of the terminal body 34, and the second limiting portion 36 is located on a side of the wall portion 23 facing the electrode assembly 10 and protrudes from the outer peripheral surface 342 of the terminal body 34.

A first outer surface 341 of the terminal body 34 and a second outer surface 351 of the first limiting portion 35 are in the same plane. The electrode terminal 30 is provided with a recessed portion 32, and the recessed portion 32 is recessed from the first outer surface 341 toward the electrode assembly 10. The connection portion 33 is connected to the terminal body 34, and the connection portion 33 and the terminal body 34 jointly define the recessed portion 32.

The connection portion 33 is welded to a current collecting member 60. At least part of the cover plate 70 is accommodated in the recessed portion 32 and welded to the terminal body 34.

The electrode terminal 30 is configured to be welded to a busbar component 8 to form a first welding portion 9. The busbar component 8 contacts both the first outer surface 341 and the second outer surface 351. The first welding portion 9 includes a first weld mark 9a and a second weld mark 9b, the first weld mark 9a is formed on the terminal body 34 and the busbar component 8, and the second weld mark 9b is formed on the first limiting portion 35 and the busbar component 8. In a thickness direction Z, the maximum dimension of the first weld mark 9a is greater than the maximum dimension of the second weld mark 9b.

Although this application has been described with reference to preferred embodiments, various improvements can be made thereto and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery cell, comprising:
a casing, comprising a wall portion;
an electrode assembly, accommodated in the casing and comprising a tab; and
an electrode terminal, provided on the wall portion, wherein a side of the electrode terminal away from the electrode assembly along a thickness direction of the wall portion is provided with an outer surface, the electrode terminal is provided with a recessed portion recessed from the outer surface, the electrode terminal comprises a connection portion provided at a bottom of the recessed portion, and the connection portion is electrically connected to the tab.

2. The battery cell according to claim 1, wherein the outer surface of the electrode terminal is configured to contact and connect to a busbar component of a battery.

3. The battery cell according to claim 2, wherein the electrode terminal is configured to be welded to the busbar component to form a first welding portion, and projections of the first welding portion and the recessed portion in the thickness direction of the wall portion do not overlap.

4. The battery cell according to any one of claims 1 to 3, wherein the wall portion is provided with an electrode lead-out hole, and the electrode lead-out hole penetrates the wall portion along the thickness direction; and
the electrode terminal further comprises a terminal body and a first limiting portion, the outer surface of the electrode terminal comprises a first outer surface of the terminal body and a second outer surface of the first limiting portion, the recessed portion is recessed from the first outer surface toward the electrode assembly, the terminal body is at least partially accommodated in the electrode lead-out hole, the first limiting portion is located on a side of the wall portion away from the electrode assembly and connected to an outer peripheral surface of the terminal body, and the connection portion is connected to the terminal body.

5. The battery cell according to claim 4, wherein along the thickness direction of the wall portion, a dimension of the terminal body is greater than a dimension of the first limiting portion, and the first outer surface is configured to contact and connect to the busbar component of the battery.

6. The battery cell according to claim 4 or 5, wherein the electrode terminal further comprises a second limiting portion, and the second limiting portion is located on a side of the wall portion facing the electrode assembly and protrudes from the outer peripheral surface of the terminal body.

7. The battery cell according to any one of claims 1 to 6, further comprising a cover plate, wherein the recessed portion is provided with an opening, and the cover plate covers the opening and connected to the electrode terminal.

8. The battery cell according to claim 7, wherein at least part of the cover plate is accommodated in the recessed portion.

9. The battery cell according to claim 7 or 8, wherein the cover plate is welded to the electrode terminal to form a second welding portion; and
along a direction from the electrode assembly toward the wall portion, the second welding portion does not protrude from the outer surface.

10. The battery cell according to any one of claims 7 to 9, wherein the cover plate is entirely accommodated in the recessed portion, a side of the cover plate away from the connection portion is provided with a third outer surface, and in the thickness direction, the third outer surface is closer to the connection portion than the outer surface.

11. The battery cell according to any one of claims 1 to 10, wherein the recessed portion is provided with an opening, the outer surface surrounds the opening, and an area of the outer surface is greater than an area of the opening.

12. The battery cell according to claim 11, wherein the area of the opening is greater than or equal to 0.01 times the area of the outer surface and less than or equal to 0.34 times the area of the outer surface.

13. The battery cell according to claim 11 or 12, wherein an area of a bottom surface of the recessed portion is greater than or equal to 0.01 times the area of the outer surface and less than or equal to 0.34 times the area of the outer surface.

14. The battery cell according to any one of claims 1 to 13, wherein an area of a cross-section of the recessed portion perpendicular to the thickness direction gradually decreases along a direction away from the outer surface.

15. The battery cell according to any one of claims 1 to 14, wherein the casing comprises a casing body and an end cover, the casing body is provided with a casing opening, and the end cover covers the casing opening;
the casing body comprises a side wall and an end wall that are integrally formed, the side wall surrounds an outer side of the electrode assembly, and the end wall is disposed opposite the casing opening; and
the wall portion is the end cover or the end wall.

16. The battery cell according to any one of claims 1 to 15, further comprising a current collecting member, wherein the current collecting member connects the tab and the connection portion.

17. A battery, comprising:
the battery cell according to any one of claims 1 to 16; and
a busbar component, contacting and connecting to the outer surface.

18. The battery according to claim 17, wherein the electrode terminal is welded to the busbar component to form a first welding portion, and projections of the first welding portion and the recessed portion in the thickness direction of the wall portion do not overlap.

19. The battery according to claim 18, wherein
the wall portion is provided with an electrode lead-out hole, and the electrode lead-out hole penetrates the wall portion along the thickness direction;
the electrode terminal further comprises a terminal body and a first limiting portion, the outer surface of the electrode terminal comprises a first outer surface of the terminal body and a second outer surface of the first limiting portion, the recessed portion is recessed from the first outer surface toward the electrode assembly, the terminal body is at least partially accommodated in the electrode lead-out hole, the first limiting portion is located on a side of the wall portion away from the electrode assembly and connected to an outer peripheral surface of the terminal body, and the connection portion is connected to the terminal body; and
the busbar component contacts the first outer surface, and at least part of the first welding portion is formed on the terminal body.

20. The battery according to claim 19, wherein the busbar component further contacts the second outer surface, and part of the first welding portion is formed on the first limiting portion.

21. The battery according to claim 20, wherein the first welding portion comprises a first weld mark and a second weld mark, the first weld mark is formed on the terminal body and the busbar component, and the second weld mark is formed on the first limiting portion and the busbar component; and
in the thickness direction, a maximum dimension of the first weld mark is greater than a maximum dimension of the second weld mark.

22. The battery according to any one of claims 17 to 21, wherein the battery cell further comprises a cover plate, the cover plate is accommodated in the recessed portion, and the cover plate is welded to the electrode terminal to form a second welding portion; and
in the thickness direction, the busbar component does not overlap with the second welding portion; or in the thickness direction, the busbar component partially overlaps with the second welding portion, a side of the busbar component facing the second welding portion is provided with an avoidance recess, and the avoidance recess is configured to avoid the second welding portion.

23. An electrical apparatus, comprising the battery according to any one of claims 17 to 22, wherein the battery is configured to provide electrical energy.
